# EUROPEAN PATENT APPLICATION

(11) **EP 0 997 730 A1**
(43) Date of publication of application: **03.05.2000**
(21) Application number: 99203370.4
(22) Date of filing: 14.10.1999
(51) Int. Cl.: G01N 27/26

(54) **PH sensor using glass particles embedded in an insulating layer**

(30) Priority: 22.10.1998 GB 9823014
(71) Applicant: EASTMAN KODAK COMPANY, Rochester, New York 14650 (US)
(72) Inventor: Edwards, Stephen, Harrow, HA1 4TY (GB); McIntyre, Stephanie, Harrow, HA1 4TY (GB); Birch, Brian, Harrow, HA1 4TY (GB); Haggett, Barry, Harrow, HA1 4TY (GB); Holland, Diane, Harrow, HA1 4TY (GB)
(74) Representative: Barker, Brenda

(57) **Abstract**

A planar pH sensor assembly has a planar substrate 2 on which is deposited an electrically conductive layer 4. A layer of soft insulating material 6 is deposited over the conductive layer. A plurality of particles 10 of pH glass are embedded in the insulating layer 6. The particles 10 have a dimension transverse to the insulating layer greater than the thickness of the insulating layer, one side of the particles being exposed above the insulating layer 6 and the opposite side being in contact with the layer below.

## Description

### Field of the Invention

This invention relates to a solid state pH sensor assembly.

### Background of the Invention

The most widely used technique to measure values of pH is to use a glass pH electrode in conjunction with a reference electrode. Conventional pH electrodes comprise a glass sheath and bulb containing a solution of potassium chloride and a pH buffer, together with a dipped silver chloride wire. This fill solution, together with a pH sensing membrane formed in the glass sheath, define the potential that is measured to determine the pH of the solution in which the sensor is immersed. The potential produced is the algebraic sum between the potentials developed across the glass membrane, indicative of the sampled pH, and the potential of an internal reference electrode, usually a coated silver chloride wire, and the external reference electrode.

### Problem to be solved by the Invention

It is known that a conventional glass pH electrode can have a maximum glass membrane thickness of 100µ to 200µ. The electrodes are very fragile and difficult to manufacture. They must also be frequently calibrated. This means that a skilled operator is required to take pH measurements.

The aim of the invention is to provide a device for measuring pH values which is cheap to manufacture and which can be mass produced with small batch variations. Ideally the device will be able to be used by an unskilled operator.

### Summary of the Invention

According to the present invention there is provided a planar pH sensor assembly comprising a planar substrate having a first surface and a second surface, an electrically conductive layer formed on the first surface of the substrate, an insulating layer formed on the surface of the electrically conductive layer remote from the substrate, the insulating layer covering the electrically conductive layer, electrical contact means in connection with the electrically conductive layer for connecting the sensor assembly to a meter device, and a plurality of particles of pH glass provided within the insulating layer, the majority of the particles having a dimension transverse to the insulating layer greater than the thickness of the insulating layer, such that one side of the particles are exposed above the surface of the insulating layer, the opposite side of the particles being in contact with the layer beneath the insulating layer.

In a preferred embodiment an additional solid electrolyte ion conductor layer is provided between the electrically conductive layer and the insulating layer. The electrically conductive layer itself can be formed of one material or may have several layers.

The invention further provides methods of manufacturing a pH sensor assembly.

### Advantageous Effect of the Invention

Sensors according to the invention are much cheaper to manufacture than conventional glass bulb pH electrodes. The sensors can be mass produced and calibrated at manufacture. They are thus much simpler to use and can be used by unskilled operators.

### Brief Description of the Drawings

Sensor assemblies in accordance with the present invention will now be described, by way of example, with reference to the accompanying drawings, in which:
Figure 1 shows a planar pH sensor according to the invention;
Figure 2 shows a second embodiment of a planar pH sensor according to the invention;
Figures 3a and 3b show two examples of conductive layers which may be used; and
Figure 4 shows a pH sensor in connection with a measurement device.

### Detailed Description of the Invention

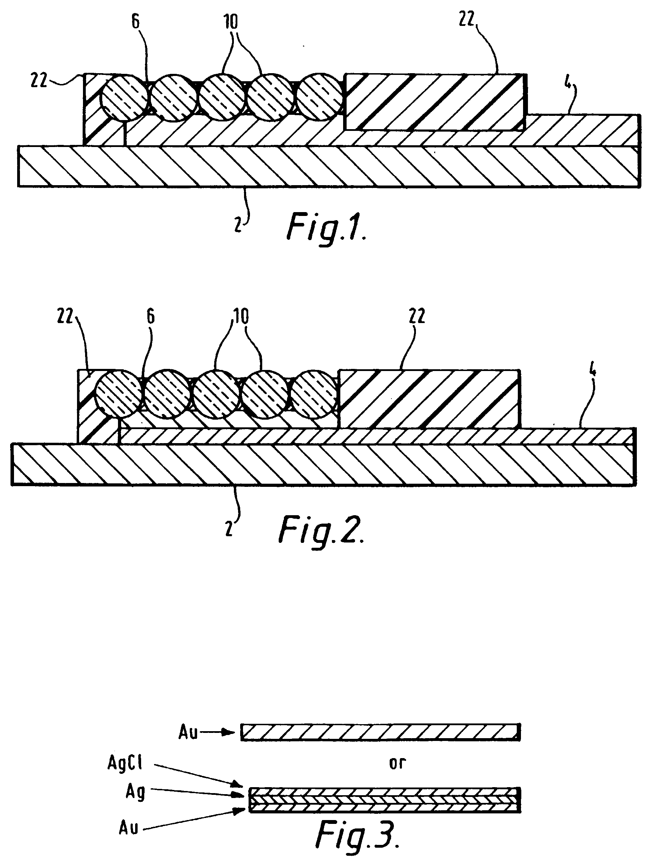

Referring to Figure 1, an electrically conductive layer 4 is deposited on a substrate 2. The conductive layer 4 is formed from a soft material such as indium or gold. A layer of soft insulating material 6 is deposited over the conductive layer 4, the conductive layer being completely enclosed by the insulating material 6. The thickness of the insulating layer 6 is in the region of 50µ. The bulk resistance of the insulating layer must be 1000 times greater than that of pH glass. The layer 6 may be formed of solid hydrocarbons or other waxes, e.g. epoxy dielectrics.

A plurality of particles of pH glass 10 are embedded in the insulating layer 6. The particles 10 have a linear dimension of between 50µ and 500µ. The particles 10 form a contact between the electrically conductive layer 4 and the solution in which the sensor is to be immersed.

A second embodiment of the pH sensor is shown in Figure 2. In this embodiment a solid electrolyte ion conductive layer 12 is provided between the insulating layer 6 and the electrically conductive layer 4. Preferably the ion conductive layer 12 promotes smooth change from ionic to electrical conductance within the device. The solid electrolyte ion conductor 12 may be formed of a polymer-containing carbon and redox material. In this example an electrically conductive layer 4 of gold would be used. This is illustrated in Figure 3a. The solid electrolyte ion conductor 12 may alternatively be made of PEO and lithium chloride. In this case the electrically conductive layer 6 would be made of three layers composed of silver chloride, silver and gold. This layer is illustrated in Figure 3b.

A suitable insulating dielectric 22 is deposited over the surface of the sensor excepting a window 14 through which part of the pH sensitive surface is exposed.

Electrical contacts are provided in connection with the conductive layer for contact with a meter device.

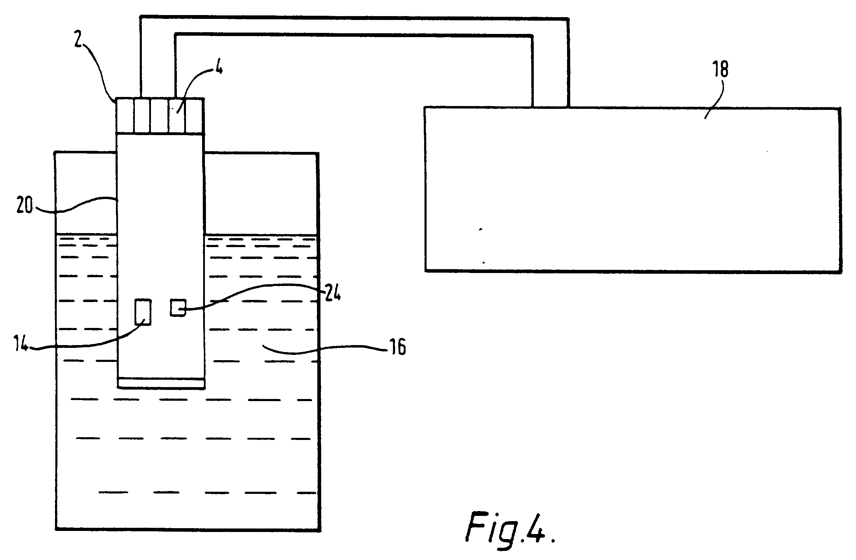

Figure 4 shows the assembly in use. The sensor assembly 20 is immersed in sample 16. Signals from the window 14 and the reference electrode 24 are supplied to a pH meter device 18.

It will be understood by those skilled in the art that the above embodiments of the sensor assembly are examples only and that the details can be changed without departing from the scope of the invention.

It is envisaged that the sensor can be manufactured in a number of ways.

The insulating material 6 may be deposited on the conductor 4 by any known technique, i.e. dipping, solvent evaporation, printing etc.. The particles of glass 10 are fired over the area of insulation. This may be by means of an air brush, electrostatic paint or ink jet printer approach. The velocity of the glass particles fired at the area of insulation is such that the particles 10 penetrate the insulating area 6 and contact the soft conductive layer 4 or 12. It is not necessary for the particles 10 to contact each other. Any particles which are less than 100µ in size will not be used when the sensor is in use. If any gaps are left in the process of firing particles into the insulating area the sensor can be subjected to a mild heat treatment.

A particular example of manufacture is as follows: Non spherical glass particles having a linear dimension of 180µ to 212µ are embedded as a monolayer in a soft conductor e.g. carbon or lithium chloride doped PEO membrane which may contain plasticizer The conductor is then overcoated with a dielectric of high volume resistivity, such as hydrocarbon or an epoxy resin. After firing the top layer is polished using silicon carbide paper. This exposes the glass particles. This method ensures that the glass particles will be in contact with the conductor whilst being exposed to the solution under test.

Further methods of producing a sensor arrangement in accordance with the invention are briefly described below.

A mixture of glass particles and thermoplastic particles are laid on a conductor. The diameter of the glass particles is about 100µ. The diameter of the thermoplastic particles is in the region of 20µ. It is envisaged that the mixture may be laid on the conductor by screen printing in a low viscosity carrier. The arrangement is then subjected to heat, melting the thermoplastic particles to allow the plastic to flow around the glass particles. It is important to ensure that the outer surfaces of the glass particles are uncovered by the melted plastic. Suitable materials for this method include hydrocarbon

A mixture of glass particles and thermoplastic particles are laid on a conductor. The diameter of the glass particles is about 100µ. The diameter of the thermoplastic particles is in the region of 20µ. It is envisaged that the mixture may be laid on the conductor by screen printing in a low viscosity carrier. The arrangement is then subjected to heat, melting the thermoplastic particles to allow the plastic to flow around the glass particles. It is important to ensure that the outer surfaces of the glass particles are uncovered by the melted plastic. Suitable materials for this method include hydrocarbon waxes, polyethylene, polystyrene, polypropylene, unplastisised PVC and nylon.

Lead glass particles can be used to form an insulating layer around the pH glass particles. The diameter of the lead glass particles is in the region of 20µ. The assembly must be heated to a temperature of about 600°C. This must be TCE compatible with alumina. Alternatively a different substrate, e.g. forsterite, zirconia or coated steel, could be used.

It is possible to "grow" an insulative layer around the glass particles by using an electropolymerised material as the insulator. As electricity flows from the electrically conductive layer it polymerises the insulator material. The thickness of the polymerised material would be self-limiting due to Ohm's law. Particles of glass could then be embedded in it. Alternatively the layer may be grown around the particles. A variety of monomers could be used. Possible polymers include polyphenol and polycatechol.

## Claims

1. A planar pH sensor assembly comprising a planar substrate having a first surface and a second surface, an electrically conductive layer formed on the first surface of the substrate, an insulating layer formed on the surface of the electrically conductive layer remote from the substrate, the insulating layer covering the conductive layer, electrical contact means in connection with the electrically conductive layer for connecting the sensor assembly to a meter device, and a plurality of particles of pH glass provided within the insulating layer, the majority of the particles having a dimension transverse to the insulating layer greater than the thickness of the insulating layer, such that one side of the particles are exposed above the surface of the insulating layer, the opposite side of the particles being in contact with the layer beneath the insulating layer.

2. A planar pH sensor assembly as claimed in claim 1 wherein a solid electrolyte layer is provided between the insulating layer and the electrically conductive layer.

3. A planar pH sensor assembly as claimed in claim 1 or 2 wherein the solid electrolyte layer is an ion conductor.

4. A planar pH sensor assembly as claimed in claim 3 wherein the ion conductor is made of a carbon and redox material.

5. A planar pH sensor assembly as claimed in claim 4 wherein the electrically conductive layer is made of gold.

6. A planar pH sensor assembly as claimed in claim 3 wherein the ion conductor is made of PEO, which may be plasticized, and lithium chloride.

7. A planar pH sensor assembly as claimed in claim 6 wherein the electrically conductive layer comprises three layers.

8. A planar pH sensor assembly as claimed in claim 7 wherein the three layers comprise silver chloride, silver and gold.

9. A planar pH sensor assembly as claimed in any preceding claim wherein the size of the particles is in the order of 50µ and 500µ.

10. A planar pH sensor assembly as claimed in claim 9 wherein the size of the particles is in the order of 150µ.

11. A method of manufacturing a planar pH sensor assembly as claimed in any preceding claim wherein the particles of glass are fired onto the insulating layer, the particles penetrating the insulating layer and coming into contact with the layer beneath the insulating layer

12. A method as claimed in claim 11 wherein the sensor assembly is then heated.

13. A method as claimed in claims 11 or 12 wherein the layer is polished to expose one side of the particles above the insulating layer.

14. A method of manufacturing a planar pH sensor assembly as claimed in any of claims 1 to 10 wherein the glass particles are pressed into the insulating layer to come into contact with the layer beneath.

15. A method of manufacturing a planar pH sensor assembly as claimed in any of claims 1 to 10 wherein the glass particles are provided within the insulating layer by laying a mixture of glass particles and thermoplastic particles onto the conductive layer and melting the thermoplastic particles to bind the glass particles within.

16. A method as claimed in claim 15 wherein the glass particles are larger than the thermoplastic particles.

17. A method of manufacturing a planar pH sensor assembly as claimed in any of claims 1 to 10 wherein the insulating layer is formed by passing electricity through an electropolymerisable material.
